# EUROPEAN PATENT APPLICATION

(11) **EP 4 513 620 A1**
(43) Date of publication of application: **26.02.2025**
(21) Application number: 23791878.4
(22) Date of filing: 19.04.2023
(51) Int. Cl.: H01M 10/54

(54) **METHOD FOR RECOVERING VALUABLE MATERIALS FROM LITHIUM-ION SECONDARY BATTERY**

(30) Priority: 19.04.2022 JP 2022068981
(71) Applicant: Matsuda Sangyo Company Limited, Tokyo 163-0558 (JP); Taiheiyo Cement Corporation, Bunkyo-ku Tokyo 112-8503 (JP)
(72) Inventor: KAMIYA, Hideyuki, Iruma-shi, Saitama 358-0033 (JP); URATA, Yasuhiro, Iruma-shi, Saitama 358-0033 (JP); OKOUCHI, Akihiro, Iruma-shi, Saitama 358-0033 (JP); ISHIDA, Yasuyuki, Sakura-shi, Chiba 285-8655 (JP); KOMATSU, Kohei, Sakura-shi, Chiba 285-8655 (JP); TAKIZAWA, Kou, Sakura-shi, Chiba 285-8655 (JP); UESUGI, Ryohei, Tokyo 112-8503 (JP)
(74) Representative: Forresters IP LLP
(86) International application number: PCT/JP2023/015546
(87) International publication number: WO 2023/204230

(57) **Abstract**

An object of the present invention is to provide a method for recovering valuable materials from a lithium-ion secondary battery capable of improving the recovery rate of copper. Provided is a method for recovering valuable materials from a lithium-ion secondary battery, comprising a heating step of heating the lithium-ion secondary battery, a crushing step of crushing the lithium-ion secondary battery after heating, and one or more steps among sieving, magnetic separation, and gravity sorting the lithium-ion secondary battery after crushing, wherein, in the crushing step, the lithium-ion secondary battery is crushed so that a size of crushed materials becomes 20 mm or less.

## Description

### Technical Field

The present invention relates to a method for recovering valuable materials from a lithium-ion secondary battery.

### Background Art

Conventionally, lithium-ion secondary batteries have been used as batteries for compact mobile devices such as mobile phones, laptop computers, and video cameras. In recent years, electric vehicles have become popular as a part of efforts for decarbonization, and large in-car lithium-ion secondary batteries are being mass-produced. Furthermore, in order to improve safety and volumetric energy density, the development of new materials that configure negative electrodes and positive electrodes, and research concerning solid electrolytes, are being actively pursued nowadays.

Generally speaking, lithium-ion secondary batteries are configured from a positive electrode, a negative electrode, a separator, an electrolyte, and so on. A positive electrode is made of an aluminum foil (positive electrode current collector) coated with an active material such as lithium, cobalt or nickel, and a binder. A negative electrode is made of a copper foil (negative electrode current collector) coated with an active material such as graphite, and a binder. The positive electrode and the negative electrode are housed in a metal exterior material.

Because a lithium-ion secondary battery contains valuable materials such as lithium, cobalt, nickel, copper, and aluminum, when it becomes spent after being repeatedly charged and discharged, the valuable materials are recovered from the spent lithium-ion secondary battery. As recovery methods, for example, Patent Document 1 describes a method of simply and efficiently recovering valuable materials such as copper and aluminum from a lithium-ion secondary battery. Furthermore, Patent Documents 2 and 3 disclose a method of separating and recovering active materials such as copper and aluminum from a spent lithium-ion battery.

### Prior Art Documents

### [Patent Documents]

[Patent Document 1] Japanese Unexamined Patent Application Publication No. 2015-170480
[Patent Document 2] Japanese Unexamined Patent Application Publication No. 2017-174517
[Patent Document 3] Japanese Unexamined Patent Application Publication No. 2018-120716

### Summary of the Invention

### Problems to be Solved by the Invention

Generally speaking, when recovering valuable materials from a lithium-ion secondary battery, the lithium-ion secondary battery is foremost discharged until the battery voltage falls below a certain level, and then heated to decompose and remove the separator and electrolyte. Next, the lithium-ion secondary battery is crushed while housed in the exterior material, and the metals contained in the exterior material, current collectors, and active materials (hereinafter also referred to as "electrode active material powders") are each separated through processes such as sieving, gravity sorting, and magnetic sorting. As a result of going through these processes, copper, aluminum, iron, and electrode active material powders (lithium, nickel, cobalt, manganese, titanium, niobium and other rare metals, graphite, silicon) can be separated. Because the grade of rare metals contained in the electrode active material powders is expected to decrease in the future, the recovery of copper, aluminum, and iron is extremely important in the recycling of lithium-ion secondary batteries.

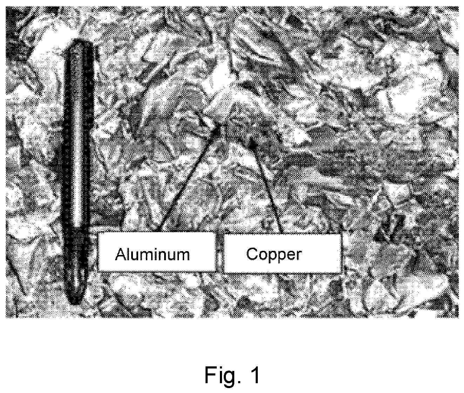

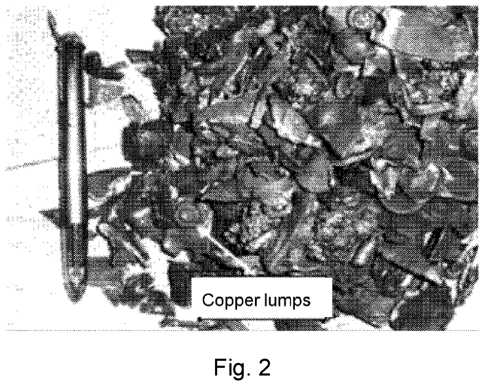

Nevertheless, when the exterior material of a lithium-ion secondary battery is crushed, as shown in Fig. 1, copper foils configuring the current collector get trapped in the ferrous metals (steel, stainless steel, or the like) and the aluminum lumps configuring the exterior material, and, as shown in Fig. 2, copper lumps such as sealing bolts and conductive bus bars attached to the exterior material cannot be liberated from the exterior material, and there was a problem in that the recovery rate of copper, which is a valuable material, deteriorates significantly. Furthermore, there was an additional problem in that the copper trapped in the ferrous metals also hindered the recycling of iron.

The present invention was devised in light of the circumstances described above, and an object of this invention is to provide a method for recovering valuable materials from a lithium-ion secondary battery capable of improving the recovery rate of copper.

### Means for Solving the Problems

In order to achieve the foregoing object, the present invention provides the following modes.
[1] A method for recovering valuable materials from a lithium-ion secondary battery, comprising a heating step of heating the lithium-ion secondary battery, a crushing step of crushing the lithium-ion secondary battery after heating, and one or more steps among sieving, magnetic separation, and gravity sorting the lithium-ion secondary battery after crushing, wherein, in the crushing step, the lithium-ion secondary battery is crushed so that a size of crushed materials becomes 20 mm or less.
[2] The method for recovering valuable materials from a lithium-ion secondary battery according to [1] above, wherein, in the crushing step, a shearing crusher is used.
[3] The method for recovering valuable materials from a lithium-ion secondary battery according to [1] or [2] above, wherein, in the crushing step, a shearing crusher capable of adjusting the particle size of crushed materials is used.
[4] The method for recovering valuable materials from a lithium-ion secondary battery according to [1] or [2] above, wherein, in the crushing step, a triaxial or tetra-axial shearing crusher is used.
[5] The method for recovering valuable materials from a lithium-ion secondary battery according to [1] above, wherein the crushing step includes two or more consecutive crushing steps.
[6] The method for recovering valuable materials from a lithium-ion secondary battery according to [1] above, further comprising a step of sieving the crushed materials after the crushing step and separating electrode active material powders as undersize products, a step of magnetic separation oversize products separated by the sieving and separating ferrous metals as magnetic products, a step of gravity sorting non-magnetic products separated by the magnetic sorting and separating heavy products and light products, a step of magnetic separation and/or gravity sorting the heavy products separated by the gravity sorting and separating copper lumps and aluminum lumps, a step of crushing the light products separated by the gravity sorting, a step of sieving the crushed light products obtained by the crushing and separating electrode active material powders as undersize products, a step gravity sorting the oversize products separated by the sieving and separating heavy products and light products, and a step of magnetic separation the light products separated by the gravity sorting and separating copper foils as non-magnetic products and aluminum foils as magnetic products.
[7] The method for recovering valuable materials from a lithium-ion secondary battery according to [1] or [6] above, wherein an air separator or an air table is used in the gravity sorting.

### Effect of the Invention

Accordingly, the present invention yields a superior effect of being able to improve the recovery rate of copper in a method for recovering valuable materials from a lithium-ion secondary battery. Furthermore, as the recovery rate of copper is improved, the amount of copper that gets trapped in the iron is reduced, and the grade of the recovered iron is consequently improved.

### [Brief Description of the Drawings]

Fig. 1 shows a photograph showing a state where the copper foil is trapped in the exterior material (photograph showing the copper foil trapped in aluminum).
Fig. 2 shows a photograph showing a state where the copper lumps have not been liberated (photograph showing that the sealing bolts and conductive bus bars have not been separated from the exterior material).
Fig. 3 shows a flowchart explaining the method for recovering valuable materials from a lithium-ion secondary battery in the Examples and the Comparative Examples.

### Mode for Carrying Out the Invention

The present invention is now explained in detail. The following explanation of the constituent elements is an example (representative example) of an embodiment of the present invention, and the present invention is not limited to these descriptions, and can be worked in various modes within the scope of this invention.

A lithium-ion secondary battery is normally configured from a positive electrode, a negative electrode, an electrolyte, a separator, and the like. The lithium-ion secondary battery functions as a battery when the lithium ions move within the electrolyte between the positive electrode and the negative electrode. Normally, a positive electrode is made from an aluminum foil, which is a current collector, coated with a positive electrode active material such as lithium, nickel, cobalt or manganese, and a binder. Meanwhile, a negative electrode is made from a copper foil, which is a current collector, coated with a negative electrode active material such as graphite or silicon. Moreover, there are cases where titanium, niobium, or the like is also used as the negative electrode active material. The positive electrode, negative electrode, electrolyte, separator and the like are housed in a ferrous metal or aluminum exterior material to configure one battery cell. Copper sealing bolts and conductive bus bars are attached to the exterior material.

In-car lithium-ion secondary batteries for use in electric vehicles and the like come in various battery cell shapes such as rectangular, cylindrical and laminated. A plurality of battery cells is gathered to configure a battery module, and a plurality of battery modules is gathered to configure a battery pack. Generally speaking, compact rectangular battery cells are used in mobile phones, laptop computers, video cameras and the like. When recovering valuable materials from a lithium-ion secondary battery, processing is performed without any particular distinction among battery cells, battery modules, and battery packs.

When recovering valuable materials from a lithium-ion secondary battery, normally, the lithium-ion secondary battery is heated to decompose and remove the inlying separator and electrolyte. After heating, the lithium-ion secondary battery is crushed and the exterior material, the inlying current collectors (copper foil, aluminum foil and the like) are finely crushed (cut), and the electrode active material powders attached to the current collectors are separated. After crushing, the processes of sieving, magnetic sorting, and gravity sorting are suitably combined and performed to separate and recover the ferrous metals configuring the exterior material and the like, copper lumps, aluminum lumps, copper foils and aluminum foils configuring the current collectors, and lithium, nickel, cobalt, manganese, graphite, titanium, niobium, silicon and the like configuring the electrode active material powders.

A method for recovering valuable materials according to an embodiment of the present invention is now explained in detail.

### [Heating step]

The heating step can be performed at any temperature or atmosphere so as long as it is possible to burn and remove at least the separator, electrolyte, and other organic substances contained in the lithium-ion secondary battery. For example, the heating temperature can be set to be in a range of 400°C or higher and 600°C or lower. Moreover, heating can be performed in an oxidizing atmosphere or a non-oxidizing atmosphere. The heating time can be suitably adjusted depending on the shape and size of the lithium-ion secondary battery and the amount of material to be heated, and, for example, can be set to 0.5 to 6 hours. Heating can be performed without any particular distinction among battery cells, battery modules, battery packs and the like.

Furthermore, before the heating step, the lithium-ion secondary battery can be discharged to lower the remaining battery charge to a certain level or lower. This is in order to prevent accidents caused by explosion, fire, or electric shock in the subsequent steps. Nevertheless, because the functions as a battery can be practically eliminated based on the heating step, discharging is merely an optional step.

### [Crushing step]

The heated lithium-ion secondary battery is crushed and the exterior material, the current collectors inside the lithium-ion secondary battery are removed and crushed, and the electrode active material powders attached to the current collector are separated. Here, when the lithium-ion secondary battery is crushed and the exterior material, the copper foils of the current collector get caught and crushed (trapped) in the fragments of the ferrous metals and aluminum lumps configuring the exterior material. Once trapped, it becomes extremely difficult to separate the copper foils in the subsequent sorting step. Moreover, the copper lumps such as sealing bolts and conductive bus bars attached to the exterior material get trapped in the ferrous metals and aluminum lumps during crushing and cannot be liberated from the exterior material, and it becomes extremely difficult to separate the copper lumps in the subsequent sorting step. Accordingly, in the crushing step, it is important to liberate the copper as much as possible without trapping the copper.

In the crushing step, the lithium-ion secondary battery is crushed with adjusting the particle size of crushed materials so that the size of the crushed materials becomes 20 mm or less. By adjusting the size of the crushed materials to fall within the foregoing range, it is possible to considerably reduce the trapping of the copper foils and copper lumps described above, and the recovery rate of copper can be improved. The size of the crushed materials is preferably 15 mm or less, and the size of the crushed materials is more preferably 1 mm or more.

When crushing the lithium-ion secondary battery using a shearing crusher for adjusting the particle size of crushed materials , a screen having openings is placed under the crushing blade, and the crushed materials are circulated until they become a size capable of passing through the openings. Here, it is important to set the openings of the screen to be around 20 mm or around 15 mm, and repeat the crushing process until the crushed materials pass through the openings of the screen. It is thereby possible to suppress the trapping of copper foils in the ferrous metals and aluminum lumps, and the copper lumps can also be liberated. It is also possible to improve the separation efficiency in the subsequent sorting step. In particular, by causing the size of the crushed materials to be uniform, subsequent gravity sorting using an air separator or an air table can be performed more effectively.

If a crusher without a screen is used, because crushing is performed only once, the size of the crushed materials will not be uniform, and it becomes difficult to liberate the copper. Accordingly, it is preferable to use a crusher equipped with a mechanism, such as a screen, capable of adjusting the particle size. Moreover, while there is an impact crusher other than a shearing crusher, when using an impact crusher, the exterior material is crushed, making it impossible to liberate the copper lumps, and the copper foils become more trapped. Accordingly, it is preferable to use a shearing crusher in the crushing step.

If a crusher with a screen is used, the crushed materials that are unable to pass through the openings of the screen are circulated within the crusher and crushed repeatedly. Here, while the crushed materials will be retained in the gap between the axes of the crusher, the electrode active material powders attached to the current collector become separated due to the rotation of the axes, which actually improves the separation efficiency. In order to improve the separation efficiency, it is preferable to use a triaxial crusher or a tetra-axial crusher. It is also effective to perform the crushing step multiple times, such as primary crushing and secondary crushing, while gradually narrowing the openings of the screen by installing shearing crushers in succession or replacing the screen.

### [Sieving]

In an embodiment of the present invention, sieving is performed as needed after crushing. There is no particular limitation to the purpose of sieving and, for example, the purpose can be to separate the electrode active material powders attached to the current collector. Otherwise, the purpose can be to obtain crushed materials of a size that is optimal for the subsequent gravity sorting or magnetic sorting.

The sieve mesh size of the sieve can be set suitably depending on the purpose. For example, when separating the electrode active material powders, the sieve mesh size can be set to 1 mm or more and 10 mm or less so that the electrode active material powders are separated as the undersize products, and the oversize products can be transferred to the subsequent sorting step.

### [Magnetic sorting]

In an embodiment of the present invention, magnetic sorting is performed as needed after crushing. There is no particular limitation to the purpose of magnetic sorting and, for example, the purpose can be to separate the ferrous metals configuring the exterior material as magnetic products. Otherwise, the purpose can be to separate aluminum foils as magnetic products and copper foils as non-magnetic products.

The magnetic force used in magnetic sorting can be set suitably depending on the purpose. For example, when separating ferrous metals, a magnet having a surface magnetic flux density of 0.3 tesla or less can be used. Moreover, when separating aluminum foils as magnetic products and copper foils as non-magnetic products, a magnet having a surface magnetic flux density of 0.8 tesla or more can be used.

### [Gravity sorting]

In an embodiment of the present invention, gravity sorting is performed as needed after crushing. There is no particular limitation to the purpose of gravity sorting and, for example, the purpose can be to separate the exterior material, bolts, bus bars and other lumps as heavy products, and the foils of the current collectors as light products.

The method and conditions of gravity sorting can be set suitably depending on the purpose. For example, gravity sorting can be performed using an air table or air separator, fluidized-bed sorter, heavy-liquid sorter, or the like. An air table is used to sort objects using air currents and vibrations as described in Patent Document 1. Copper lumps can be separated by performing this sorting process.

After crushing, various types of valuable materials can be separated and recovered by combining the processes of sieving, magnetic sorting, and gravity sorting described above. There is no particular limitation to the order or number of times that sieving, magnetic sorting, and gravity sorting should be performed, and these can be suitably selected depending on the target material. For example, after performing gravity sorting, the method and conditions of gravity sorting can be changed and gravity sorting can be performed once again. Otherwise, after the magnetic products are separated based on magnetic sorting, gravity sorting can be performed, and magnetic sorting can be performed once again thereafter to separate the magnetic products.

Moreover, after performing sieving, magnetic sorting, and gravity sorting, crushing can be performed once again as needed. What is important in the present disclosure is that, in the crushing performed before the sorting, the size of the crushed materials is made uniform within a certain range to reduce the trapping of copper foils in the ferrous metals and aluminum lumps, and the copper lumps are liberated. Accordingly, after reducing trapping and performing sorting, the processes of crushing and sieving can be performed once again as needed.

Note that, while the copper foils trapped in the ferrous metals and aluminum lumps can be separated by color sorting as described in Patent Documents 1 and 3, because the copper foils are trapped in the ferrous metals and aluminum lumps in a laminated state based on crushing, it is extremely difficult to separate the copper foils. In this embodiment, because the crushing step has been devised to suppress the trapping of the copper foils, there is no need to perform color sorting under normal circumstances.

### [Recovered materials]

By going through the steps described above, it is possible to separate ferrous metals configuring the exterior material and the like, copper lumps, aluminum lumps, copper foils and aluminum foils configuring the current collectors, and lithium, nickel, cobalt, manganese, graphite, silicon, titanium, niobium, silicon and the like configuring the electrode active material powders. Note that active materials and other electrode active materials may be changed in the future in order to improve the performance of lithium-ion secondary batteries. In the present disclosure, it would be sufficient so as long as copper is at least included in the valuable materials to be recovered.

### [Examples]

The present invention is now explained based on the following Examples. Note that the following Examples are merely representative examples, and the present invention does not need to be limited to these Examples. In other words, the present invention should be interpreted only pursuant to the scope of claims described herein, and covers the various modifications other than the Examples included in the present invention.

### (Example 1)

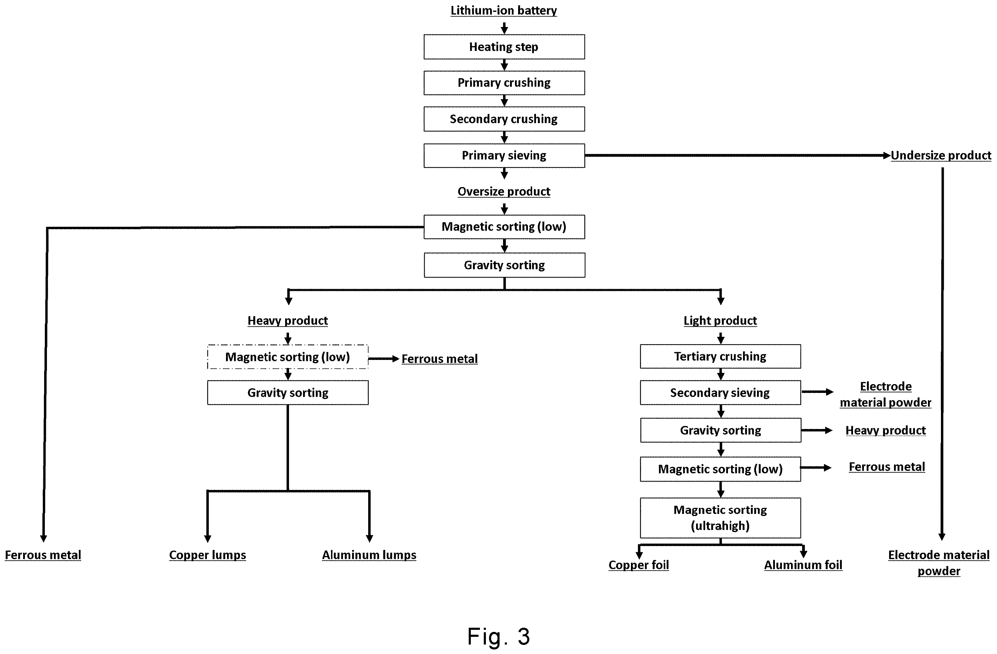

Valuable materials were recovered from a lithium-ion secondary battery according to the flow shown in Fig. 3.
Foremost, an in-car battery module, which is a lithium-ion secondary battery, was subject to heat treatment for 4 hours using a hot air heating furnace capable of generating hot air of 400°C to 600°C. The heat-treated battery module was thereafter subject to primary crushing with a tetra-axial shearing crusher so that the size of the crushed materials became 40 mm or less. Next, the crushed materials obtained based on the primary crushing were subject to secondary crushing with a tetra-axial shearing crusher so that the size of the crushed materials became 15 mm or less. Next, the obtained crushed materials were subject to primary sieving using a sieve having a sieve mesh size of 1.0 mm to separate the undersize products (electrode active material powders).

The oversize products having a size exceeding 1.0 mm obtained from the primary sieving were sorted using a hanging magnetic sorter having a magnetic flux density of 0.03 tesla to remove the ferrous metals, which are the crushed exterior materials as magnetic components. The non-magnetic products were sorted into heavy products and light products using an air separator.

The heavy products obtained with the previous air separation were sorted using a drum-type magnetic sorter having a magnetic flux density of 0.15 tesla to remove the ferrous metals as magnetic components. Meanwhile, the non-magnetic products were sorted into copper lumps and aluminum lumps using an air table.

The light products obtained with the previous air separation were subject to tertiary crushing using a uniaxial shearing crusher. The thus obtained crushed materials were subject to secondary sieving using a sieve having a sieve mesh size of 1.0 mm to separate the undersize products (electrode active material powders). The oversize products having a size exceeding 1.0 mm that were separated with the sieve were subject to gravity sorting to remove the copper lumps and aluminum lumps as heavy products. The thus obtained light products were sorted using a drum-type magnetic sorter having a magnetic flux density of 0.15 tesla to remove the ferrous metals as magnetic components. The non-magnetic products were sorted using an ultrahigh magnetic sorter having a magnetic flux density of 1 tesla or more to separate the copper foils and aluminum foils.

### (Example 2)

Other than setting the size of the crushed materials from the primary crushing to 25 mm or less, valuable materials were recovered from a lithium-ion secondary battery under the same conditions as Example 1.

### (Comparative Example 1)

Other than not performing secondary crushing, valuable materials were recovered from a lithium-ion secondary battery under the same conditions as Example 1.

Table 1 shows the recovery rate and grade of copper lumps and copper foils relative to the copper content in the battery module (lithium-ion secondary battery) placed in the heating furnace. Note that the various recovery rates and grades were calculated based on the following formulas. Recovery rate (%) of copper lumps = weight of recovered copper lumps / weight of copper in secondary battery × 100 Recovery rate (%) of copper foils = weight of recovered copper foils / weight of copper in secondary battery × 100 Total recovery rate (%) of copper = (weight of recovered copper lumps + weight of recovered copper foils) / weight of copper in secondary battery × 100 Grade (%) of copper lumps = weight of copper lumps / (air table heavy product weight) × 100 Grade (%) of copper foils = weight of copper foils / (magnetic sorting (ultrahigh) non-magnetic product weight) × 100

### [Table 1]

**Table1**

| | Size of crushed materials | | Copper lumps | | Copper foils | | Copper recovery rate (total) |
|---|---|---|---|---|---|---|---|
| | Primary crushing | Secondary crushing | Recovery rate | Grade | Recovery rate | Grade | |
| Example 1 | 40 mm or less | 15 mm or less | 34% | 91% | 28% | 87% | 62% |
| Example 2 | 25 mm or less | 15 mm or less | 35% | 84% | 34% | 94% | 69% |
| Comparative Example 1 | 40 mm or less | - | 0% | - | 20% | 80% | 20% |

In Example 1, the recovery rate of copper lumps was 34% and the grade of copper lumps was 91%, the recovery rate of copper foils was 28% and the grade of copper foils was 87%, and the total recovery rate of copper from copper lumps and copper foils was 62%.
In Example 2, the recovery rate of copper lumps was 35% and the grade of copper lumps was 84%, the recovery rate of copper foils was 34% and the grade of copper foils was 94%, and the total recovery rate of copper from copper lumps and copper foils was 69%.

In Comparative Example 1, the recovery rate of copper lumps was 0%, the recovery rate of copper foils was 20% and the grade of copper foils was 80%, and the total recovery rate of copper from copper lumps and copper foils was 20%.

From the results described above, it is evident that, in Examples 1 and 2, the recovery rate of copper improved by approximately 40 to 50% in comparison to Comparative Example 1. As described above, by crushing with adjusting the particle size of crushed materials so that the size of the crushed materials becomes 20 mm or less, the liberation of sealing bolts and conductive bus bars is promoted, the recovery rate of copper lumps is improved, and copper foils are less likely to get trapped in the exterior material, whereby the recovery rate of copper foils is significantly improved. Industrial Applicability

Accordingly, the present invention yields a superior effect of being able to improve the recovery rate of copper, as well as reduce the amount of copper in the ferrous metals and improve its grade, in a method for recovering valuable materials from a lithium-ion secondary battery. The present invention can be suitably applied as a method for recovering valuable materials from in-car lithium-ion secondary batteries, the market for which is expected to expand in the future.

## Claims

1. A method for recovering valuable materials from a lithium-ion secondary battery, comprising a heating step of heating the lithium-ion secondary battery, a crushing step of crushing the lithium-ion secondary battery after heating, and one or more steps among sieving, magnetic separation, and gravity sorting the lithium-ion secondary battery after crushing, wherein, in the crushing step, the lithium-ion secondary battery is crushed so that a size of crushed materials becomes 20 mm or less.

2. The method for recovering valuable materials from a lithium-ion secondary battery according to claim 1, wherein, in the crushing step, a shearing crusher is used.

3. The method for recovering valuable materials from a lithium-ion secondary battery according to claim 1 or claim 2, wherein, in the crushing step, a shearing crusher capable of adjusting the particle size of crushed materials is used.

4. The method for recovering valuable materials from a lithium-ion secondary battery according to claim 1 or claim 2, wherein, in the crushing step, a triaxial or tetra-axial shearing crusher is used.

5. The method for recovering valuable materials from a lithium-ion secondary battery according to claim 1, wherein the crushing step includes two or more consecutive crushing steps.

6. The method for recovering valuable materials from a lithium-ion secondary battery according to claim 1, further comprising a step of sieving the crushed materials after the crushing step and separating electrode active material powders as undersize products, a step of magnetic separation oversize products separated by the sieving and separating ferrous metals as magnetic products, a step of gravity sorting non-magnetic products separated by the magnetic sorting and separating heavy products and light products, a step of magnetic separation and/or gravity sorting the heavy products separated by the gravity sorting and separating copper lumps and aluminum lumps, a step of crushing the light products separated by the gravity sorting, a step of sieving the crushed materials obtained by the crushing and separating electrode active material powders as undersize products, a step gravity sorting the oversize products separated by the sieving and separating heavy products and light products, and a step of magnetic separation the light products separated by the gravity sorting and copper foils as non-magnetic products and aluminum foils as magnetic products.

7. The method for recovering valuable materials from a lithium-ion secondary battery according to claim 1 or claim 6, wherein an air separator or an air table is used in the gravity sorting.
